# EUROPEAN PATENT SPECIFICATION

(11) **EP 4 239 705 B1**
(45) Date of publication and mention of the grant of the patent: **28.05.2025**
(21) Application number: 22881332.5
(22) Date of filing: 12.10.2022
(51) Int. Cl.: H01M 4/04, H01M 4/139, B05C 5/02, H01M 10/42, H01M 10/052

(54) **COATING DIE FOR LITHIUM SECONDARY BATTERY, INCLUDING REMOVABLE SPACER SHIMS**
BESCHICHTUNGSDÜSE FÜR EINE LITHIUMSEKUNDÄRBATTERIE MIT ENTFERNBAREN DISTANZSCHEIBEN
FILIÈRE D'ENDUCTION POUR BATTERIE RECHARGEABLE AU LITHIUM, COMPRENANT DES CALES D'ESPACEMENT AMOVIBLES

(30) Priority: 12.10.2021 KR 20210135173
(43) Date of publication of application: 06.09.2023
(73) Proprietor: LG Energy Solution, Ltd., Seoul 07335 (KR)
(72) Inventor: HAN, Yoonju, Daejeon 34122 (KR); AHN, Byoung Hoon, Daejeon 34122 (KR); CHOI, Hyunwoo, Daejeon 34122 (KR); CHAE, Hyeong Geun, Daejeon 34122 (KR)
(74) Representative: Plasseraud IP
(86) International application number: PCT/KR2022/015360
(87) International publication number: WO 2023/063705

(56) References cited:
- CN-A- 113 275 200
- CN-U- 211 026 907
- CN-U- 212 136 588
- JP-A- 2001 029 861
- JP-B2- 6 794 473
- KR-A- 20130 098 758
- KR-A- 20150 045 119
- KR-A- 20190 096 114
- KR-B1- 101 801 422
- KR-B1- 102 035 826
- KR-B1- 102 035 826

## Description

### [TECHNICAL FIELD]

### Cross Citation with Related Application(s)

This application claims the benefit of Korean Patent Application No. 10-2021-0135173 filed on October 12, 2021 with the Korean Intellectual Property Office.

The present disclosure relates to a coating die for lithium secondary battery including removable spacer shims

### [BACKGROUND]

With the technology development and increased demand for mobile devices, demand for secondary batteries as energy sources has been rapidly increasing. Among such secondary batteries is a lithium secondary battery exhibiting a high energy density and operating voltage, a long cycle lifespan, and a low self-discharge rate, which is now commercialized and widely used.

Also, recently, as interest in environmental issues grows, studies are frequently conducted on an electric vehicle (EV), a hybrid electric vehicle (HEV), etc. which can replace a vehicle using fossil fuels such as a gasoline vehicle and a diesel vehicle, which are one of the main causes of air pollution. A lithium secondary battery having high energy density, discharge voltage and output stability is mainly studied and used as a power source for the electric vehicle (EV), the hybrid electric vehicle (HEV) and the like.

Such a lithium secondary battery is generally manufactured by stacking or winding electrodes of cathode and anode with a separator interposed therebetween, and incorporating them together with an electrolyte solution in a battery case.

Among them, electrodes such as the cathode and the anode are manufactured by applying, drying, and rolling an active material slurry on a current collector, wherein the application of the active material slurry is generally performed by a coating die that discharges the active material slurry.

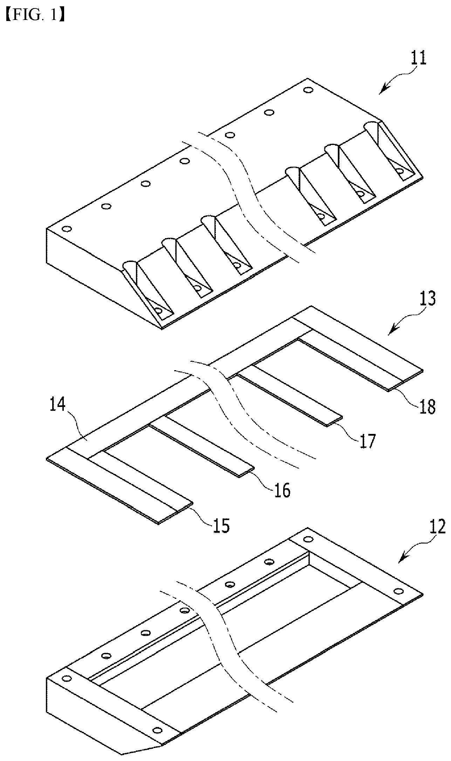

At this time, a perspective view of the coating die is shown as an example in Fig. 1 below.

Referring to Fig. 1 below, such a coating die is composed of an upper coating die 11, a lower coating die 12, and a shim assembly 13 interposed therebetween, wherein the shim assembly 13 has a structure in which a body shim 14 for forming a connection between the upper coating die 11 and the lower coating die 12, and spacer shims 15, 16, 17 and 18 for discharging an insulating liquid are integrated.

However, recently, as the number of lanes for manufacturing electrodes increases and the width of metal foil used as a current collector increases, the integrated shim assembly shows many difficulties in the adjustment of individual slurry width, loading, and mismatch, and has problems with precision design and assembly of the spacer shims in simultaneously forming the insulating liquid and the active material slurry.

Therefore, there is a need to develop a technology that can solve the above problems. CN 211 026 907 U discloses a die head gasket.
KR 102 035 826 B1, JP 2001 029861 A and CN 113 275 200 A disclose further die-coaters.

### [DETAILED DESCRIPTION OF THE INVENTION]

### [Technical Problem]

It is an object of the present disclosure to provide a coating die for a lithium secondary battery having a novel structure that allows adjustment of the coating width, loading, and mismatch of an active material slurry or an insulating liquid for each lane as needed.

### [Technical Solution]

The invention is as defined by the appended claims.

According to the present invention, there is provided a coating die for a lithium secondary battery,
the coating die comprising an upper die plate, a lower die plate, and a shim assembly interposed between the upper die plate and the lower die plate,
wherein the shim assembly includes a body shim and one or more spacer shims, and
wherein the spacer shims are formed to be individually removable from the coating die.

In one specific embodiment, the upper die plate may include an insulating liquid injection path into which an insulating liquid is injected.

Wherein, the insulating liquid injection path may be formed from an upper part to a lower part.

In one specific embodiment, the lower die plate is coupled to the upper die plate, and may include a slurry injection path into which the active material slurry is injected, and a manifold that stores the active material slurry, wherein the lower die plate is coupled to the upper die plate by a fixing pin, a fixing bolt, or both.

In one specific embodiment, the body shim is coupled with the upper die plate and the lower die plate, and may have an outlet port that is opened from the manifold toward the outside where the coating is performed and thus discharges the active material slurry stored in the manifold, so as not to cover the manifold formed on the lower die plate and storing the active material slurry.

Wherein, the body shim may be coupled to the upper die plate and the lower die plate by a fixing pin, a fixing bolt, or both.

In the invention, the spacer shims are individually coupled with the upper die plate, the lower die plate, or the upper die plate and the lower die plate, and may include an insulated flow passage that positioned so as to correspond to an insulating liquid injection path of the upper die plate, stores and discharges the insulating liquid injected from the injection path of the upper die plate.

Wherein, the spacer shims may be coupled with the upper die plate, the lower die plate, or the upper and lower die plates by a fixing pin, a fixing bolt, or both.

Further, the fixing pin and the fixing bolt are formed by a structure capable of coupling and removal, and thus, can be formed so that the spacer shims are removable from the coating die.

The spacer shims may consist of one or more numbers or may be included less than or equal to the number of insulating liquid injection paths formed on the upper die plate.

### [BRIEF DESCRIPTION OF THE DRAWINGS]

Fig. 1 is a perspective view of a conventional coating die for a lithium secondary battery;
Fig. 2 is a perspective view of a coating die for a lithium secondary battery according to one embodiment of the present disclosure;
Fig. 3 is a cross-sectional view of the upper die plate of Fig. 1; and
Fig. 4 is a perspective view of the spacer shim of Fig. 1.

### [DETAILED DESCRIPTION OF THE EMBODIMENTS]

Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way. Accordingly, the embodiments described herein and the configurations shown in the drawings are only most preferable embodiments of the present invention which is defined by the appended claims. So it should be appreciated that there may be various equivalents and modifications that can replace the embodiments and the configurations at the time at which the present application is filed, and the scope of the present invention is limited by the appended claims and is not limited to the embodiments described below.

Hereinafter, the present disclosure will be described in detail with reference to the accompanying drawings. Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way.

Further, the embodiments described herein and the configurations shown in the drawings are only most preferable embodiments of the present invention which is defined by the appended claims. So it should be appreciated that there may be various equivalents and modifications that can replace the embodiments and the configurations at the time at which the present application is filed.

According to the present invention, there is provided a coating die for a lithium secondary battery,
the coating die comprising an upper die plate, a lower die plate, and a shim assembly interposed between the upper die plate and the lower die plate,
wherein the shim assembly includes a body shim and one or more spacer shims, and
wherein the spacer shims are formed to be individually removable from the coating die.

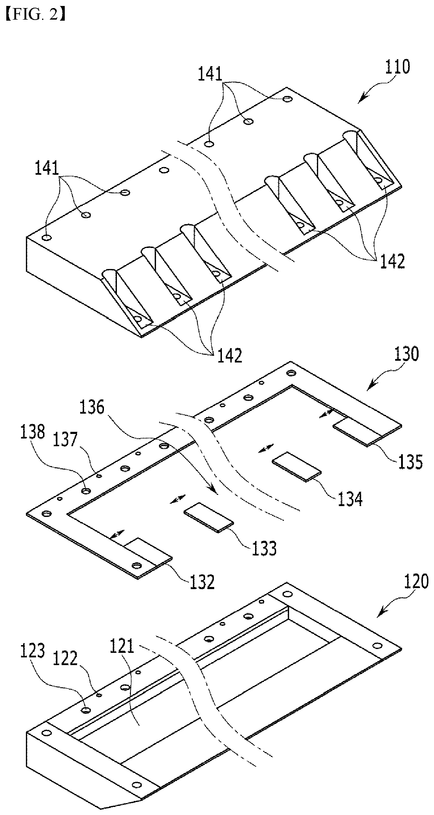

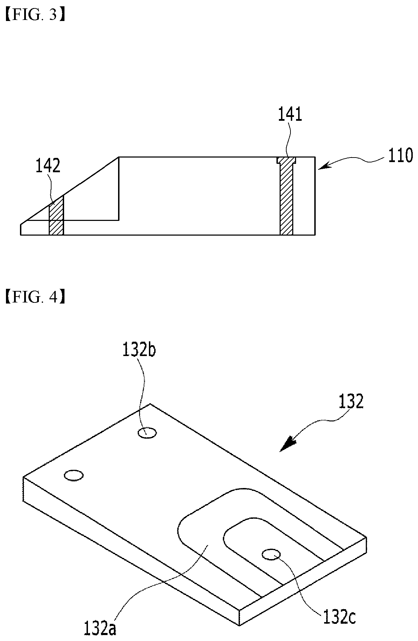

Fig. 2 is a perspective view of a coating die for a lithium secondary battery according to one embodiment of the present disclosure, Fig. 3 is a cross-sectional view of the upper die plate 110 of the coating die, and Fig. 4 is a perspective view of one spacer shim 132 of the coating die.

In one an example, the present disclosure will be described with reference to Figs. 2 to 4 together.

Referring to Fig. 2, the coating die for a lithium secondary battery according to the present disclosure includes an upper die plate 110, a lower die plate 120, and a shim assembly 130 interposed between the upper die plate 110 and the lower die plate 120, wherein the shim assembly 130 includes a body shim 131 and one or more spacer shims 132, 133, 134 and 135.

More specifically, the upper die plate 110 includes coupling holes 141 into which fixing pins, fixing bolts, or both for coupling with the lower die plate 120 are inserted, and insulating liquid injection paths 142 into which an insulating liquid is injected.

Referring to Fig. 3 together with Fig. 2, the insulating liquid injection path 142 is formed from the upper part to the lower part and is formed so as to pass through the upper die plate 110, which makes it possible to inject the insulating liquid into the spacer shims 132, 133, 134 and 135 through the insulating liquid injection paths 142.

The coupling hole 141 is formed for coupling between the body shim 130 and the lower die plate 120, which will be described later.

Meanwhile, the lower die plate 120 includes a slurry injection path into which the active material slurry is injected (not shown in the figure), and a manifold 121 that stores the active material slurry.

Here, the slurry injection path has a structure that is connected to the manifold 121. Therefore, the active material slurry injected from the slurry injection path reaches the manifold 121 and is stored.

The active material slurry stored in the manifold 121 performs electrode coating in the form of being discharged from the outlet port 136 of the body shim 131 of the shim assembly 130 of the coating die in an assembled state , which will be described later.

For this purpose, the lower die plate 120 is coupled to the upper die plate 110, wherein since it can be coupled by a fixing pin, a fixing bolt, or both, and the lower die plate 120 can also include coupling holes 122 and 123 that can be coupled with the upper die plate 110.

As a component of the shim assembly 130, the body shim 131 has an outlet port 136 that is opened from the manifold 121 toward the outside where the coating is performed and thus discharges the active material slurry stored in the manifold 121, so as not to cover the manifold 121 formed on the lower die plate 120 and storing the active material slurry.

As described above, the active material slurry stored in the manifold 121 is discharged through the outlet port 136. That is, the body shim 131 simply has a ' 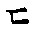 ' shape.

Further, the body shim 131 is coupled with the upper die plate 110 and the lower die plate 120. At this time, the coupling of the body shim 131 may also be formed by a fixing pin, a fixing bolt, or both, and thus, the body shim 131 may include coupling holes 137 and 138 into which they can be inserted.

Meanwhile, the spacer shims 132, 133 , 134 and 135 included in the coating die 100 of the present disclosure are configured to be individually removable.

Specifically, the spacer shims 132 , 133 , 134 and 135 are individually coupled with the upper die plate 110, the lower die plate 120, or the upper die plate 110 and the lower die plate 120.

In order to be individually removable, the spacer shims 132, 133, 134 and 135 can be coupled to the upper die plate 110, the lower die plate 120, or the upper die plate 110 and the lower plate 120 by a fixing pin, a fixing bolt, or both.

Here, the fixing pin and the fixing bolt are formed by a structure capable of coupling and removal, so that the spacer shims 132, 133, 134 and 135 are formed to be removable from the coating die 100.

At this time, the spacer shims 132, 133, 134 and 135 may be formed at any position corresponding to the insulating liquid injection path 142 of the die upper plate 110, and the width and formation position thereof can be appropriately selected as needed.

Further, since the number of spacer shims 132, 133, 134 and 135 used can also be selected, the spacer shims may consist of one or more numbers or may be included less than or equal to the number of insulation liquid injection paths formed on the upper plate of the die. Specifically, it is preferable that the number of spacer shims is 1 or more, specifically 2 or more, and more specifically 3 or more.

Therefore, according to the present disclosure, the spacer shims 132, 133, 134 and 135 is individually removable from the coating die 100, and the number and position of each can be changed, thus enabling adjustment of the coating width, loading, and mismatch between active material slurry and insulating liquid.

In order to show the specific structure of these spacer shims 132, 133, 134 and 135, Fig. 4 schematically shows a perspective view of one of these spacer shims 132.

Referring to Fig. 4, the spacer shim 132 includes coupling holes 132b and 132c for coupling with the upper die plate 110 and/or the lower die plate 120.

Further, the spacer shims 132, 133, 134 and 135 specifically serve to coat the insulating liquid. Therefore, the spacer shims 132, 133, 134 and 135 include an insulating flow passage 132a through which the insulating liquid injected from the insulating liquid input path 142 of the die upper plate 110 is discharged to the outside of the coating die 100.

Therefore, the active material slurry of the manifold 121 of the lower die plate 120 is discharged and coated by the outlet port 136 of the body shim 131, and the insulating liquid is discharged and coated through the insulating flow passages 132a of the spacer shims 132, 133, 134 and 135.

Therefore, simultaneous coating of the active material slurry and the insulating liquid is possible.

Any person who has ordinary knowledge in the field to which the present disclosure pertains can make various applications and modifications within the scope of the present invention, which is defined by the appended claims, based on the above contents.

### [Industrial Applicability]

A coating die for a lithium secondary battery according to the present disclosure has a removable spacer shim that discharges the insulating liquid, and has an effect of enabling adjustment of the coating width, loading, and mismatch of the active material slurry and the insulating liquid, if necessary.

## Claims

1. A coating die for a lithium secondary battery,
the coating die comprising an upper die plate (110), a lower die plate (120), and a shim assembly (130) interposed between the upper die plate (110) and the lower die plate (120),
wherein the shim assembly (130) includes a body shim (131) and one or more spacer shims (132, 133, 134, 135), and
wherein the spacer shims (132, 133, 134, 135) are formed to be individually removable from the coating die,
**characterized in that** the spacer shims (132, 133, 134, 135) are individually coupled with the upper die plate (110), the lower die plate (120), or the upper die plate (110) and the lower die plate (120), and include an insulated flow passage that is positioned so as to correspond to an insulating liquid injection path (142) of the upper die plate (110), stores and discharges the insulating liquid injected from the injection path of the upper die plate (110).

2. The coating die according to claim 1, wherein:
the insulating liquid injection path (142) is formed from an upper part to a lower part.

3. The coating die according to claim 1, wherein:
the lower die plate (120) is coupled to the upper die plate (110), and includes a slurry injection path into which the active material slurry is injected, and a manifold (121) that stores the active material slurry.

4. The coating die according to claim 1, wherein:
the lower die plate (120) is coupled to the upper die plate (110) by a fixing pin, a fixing bolt, or both.

5. The coating die according to claim 1, wherein:
the body shim (131) is coupled with the upper die plate (110) and the lower die plate (120), and has an outlet port (136) that is opened from the manifold (121) toward the outside where the coating is performed and thus discharges the active material slurry stored in the manifold (121), so as not to cover the manifold (121) formed on the lower die plate (120) and storing the active material slurry.

6. The coating die according to claim 1, wherein:
the body shim (131) is coupled to the upper die plate (110) and the lower die plate (120) by a fixing pin, a fixing bolt, or both.

7. The coating die according to claim 1, wherein:
the spacer shims (132, 133, 134, 135) are coupled with the upper die plate (110), the lower die plate (120), or the upper and lower die plates (110, 120) by a fixing pin, a fixing bolt, or both.

8. The coating die according to claim 1, wherein:
the fixing pin and the fixing bolt are formed by a structure capable of coupling and removal, and thus, are formed so that the spacer shims (132, 133, 134, 135) are removable from the coating die.

9. The coating die according to claim 1, wherein:
the spacer shims (132, 133, 134, 135) consist of one or more numbers or are included less than or equal to the number of insulating liquid injection paths (142) formed on the upper die plate (110).

## Patentansprüche

1. Beschichtungsdüse für eine Lithiumsekundärbatterie,
wobei die Beschichtungsdüse eine obere Düsenplatte (110), eine untere Düsenplatte (120) und eine Scheibenanordnung (130) umfasst, welche zwischen der oberen Düsenplatte (110) und der unteren Düsenplatte (120) eingefügt ist,
wobei die Scheibenanordnung (130) eine Körperscheibe (131) und eine oder mehrere Distanzscheiben (132, 133, 134, 135) umfasst und
wobei die Distanzscheiben (132, 133, 134, 135) derart gebildet sind, dass sie individuell von der Beschichtungsdüse lösbar sind,
**dadurch gekennzeichnet, dass** die Distanzscheiben (132, 133, 134, 135) individuell mit der oberen Düsenplatte (110), der unteren Düsenplatte (120) oder der oberen Düsenplatte (110) und der unteren Düsenplatte (120) gekoppelt sind und einen isolierten Strömungskanal umfassen, welcher derart positioniert ist, dass er einem Isolierflüssigkeitseinspritzpfad (142) der oberen Düsenplatte (110) entspricht, und die von dem Einspritzpfad der oberen Düsenplatte (110) eingespritzte Isolierflüssigkeit speichert und abgibt.

2. Beschichtungsdüse nach Anspruch 1, wobei:
der Isolierflüssigkeitseinspritzpfad (142) von einem oberen Teil zu einem unteren Teil gebildet ist.

3. Beschichtungsdüse nach Anspruch 1, wobei:
die untere Düsenplatte (120) mit der oberen Düsenplatte (110) gekoppelt ist und einen Aufschlämmungseinspritzpfad, in welchen die Aktivmaterialaufschlämmung eingespritzt wird, und einen Verteiler (121) umfasst, welcher die Aktivmaterialaufschlämmung speichert.

4. Beschichtungsdüse nach Anspruch 1, wobei:
die untere Düsenplatte (120) durch einen Fixierungsstift, einen Fixierungsbolzen oder beides mit der oberen Düsenplatte (110) gekoppelt ist.

5. Beschichtungsdüse nach Anspruch 1, wobei:
die Körperscheibe (131) mit der oberen Düsenplatte (110) und der unteren Düsenplatte (120) gekoppelt ist und eine Auslassöffnung (136) aufweist, welche von dem Verteiler (121) in Richtung des Äußeren geöffnet ist, wo die Beschichtung durchgeführt wird, und somit die in dem Verteiler (121) gespeicherte Aktivmaterialaufschlämmung abgibt, um den Verteiler (121) nicht zu bedecken, welcher an der unteren Düsenplatte (120) gebildet ist und die Aktivmaterialaufschlämmung speichert.

6. Beschichtungsdüse nach Anspruch 1, wobei:
die Körperscheibe (131) durch einen Fixierungsstift, einen Fixierungsbolzen oder beides mit der oberen Düsenplatte (110) und der unteren Düsenplatte (120) gekoppelt ist.

7. Beschichtungsdüse nach Anspruch 1, wobei:
die Distanzscheiben (132, 133, 134, 135) durch einen Fixierungsstift, einen Fixierungsbolzen oder beides mit der oberen Düsenplatte (110), der unteren Düsenplatte (120) oder der oberen und der unteren Düsenplatte (110, 120) gekoppelt sind.

8. Beschichtungsdüse nach Anspruch 1, wobei:
der Fixierungsstift und der Fixierungsbolzen durch eine Struktur gebildet sind, welche zu einem Koppeln und einem Lösen in der Lage ist, und somit derart gebildet sind, dass die Distanzscheiben (132, 133, 134, 135) von der Beschichtungsdüse lösbar sind.

9. Beschichtungsdüse nach Anspruch 1, wobei:
die Distanzscheiben (132, 133, 134, 135) aus einer oder mehreren Stückzahlen bestehen oder in einer Anzahl enthalten sind, welche kleiner als oder gleich wie die Anzahl der Isolierflüssigkeitseinspritzpfade (142) ist, welche an der oberen Düsenplatte (110) gebildet sind.

## Revendications

1. Filière d'enduction pour une batterie rechargeable au lithium,
la filière d'enduction comprenant une plaque de filière supérieure (110), une plaque de filière inférieure (120), et un ensemble cale (130) interposé entre la plaque de filière supérieure (110) et la plaque de filière inférieure (120),
dans lequel l'ensemble cale (130) comporte une cale de corps (131) et une ou plusieurs cales d'espacement (132, 133, 134, 135), et
dans lequel les cales d'espacement (132, 133, 134, 135) sont formées pour être amovibles individuellement à partir de la matrice d'enduction,
**caractérisé en ce que** les cales d'espacement (132, 133, 134, 135) sont accouplées individuellement à la plaque de filière supérieure (110), à la plaque de filière inférieure (120), ou à la plaque de filière supérieure (110) et à la plaque de filière inférieure (120), et comportent un passage d'écoulement isolé qui est positionné de manière à correspondre à un trajet d'injection de liquide isolant (142) de la plaque de filière supérieure (110), stocke et évacue le liquide isolant injecté à partir du trajet d'injection de la plaque de filière supérieure (110).

2. Filière d'enduction selon la revendication 1, dans laquelle :
le trajet d'injection de liquide isolant (142) est formé d'une partie supérieure à une partie inférieure.

3. Filière d'enduction selon la revendication 1, dans laquelle :
la plaque de filière inférieure (120) est accouplée à la plaque de filière supérieure (110), et comporte un trajet d'injection de boue dans lequel la boue de matériau actif est injectée, et un collecteur (121) qui stocke la boue de matériau actif.

4. Filière d'enduction selon la revendication 1, dans laquelle :
la plaque de filière inférieure (120) est accouplée à la filière de filière supérieure (110) par une goupille de fixation, un boulon de fixation, ou les deux.

5. Filière d'enduction selon la revendication 1, dans laquelle :
la cale de corps (131) est accouplée à la plaque de filière supérieure (110) et à la plaque de filière inférieure (120), et présente un orifice de sortie (136) qui s'ouvre du collecteur (121) en direction de l'extérieur où l'enduction est réalisée et décharge ainsi la boue de matériau actif stockée dans le collecteur (121), de manière à ne pas recouvrir le collecteur (121) formé sur la filière d'enduction inférieure (120) et stockant la boue de matériau actif.

6. Filière d'enduction selon la revendication 1, dans laquelle :
la cale de corps (131) est accouplée à la plaque de filière supérieure (110) et à la plaque de filière inférieure (120) par une goupille de fixation, un boulon de fixation, ou les deux.

7. Filière d'enduction selon la revendication 1, dans laquelle :
les cales d'espacement (132, 133, 134, 135) sont accouplées à la plaque de filière supérieure (110), à la plaque de filière inférieure (120), ou aux plaques de filière supérieure et inférieure (110, 120) par une goupille de fixation, un boulon de fixation, ou les deux.

8. Filière d'enduction selon la revendication 1, dans laquelle :
la goupille de fixation et le boulon de fixation sont formés par une structure apte à l'accouplement et au retrait, et sont ainsi formés de sorte que les cales d'espacement (132, 133, 134, 135) soient amovibles par rapport à la filière d'enduction.

9. Filière d'enduction selon la revendication 1, dans laquelle :
les cales d'espacement (132, 133, 134, 135) sont constituées d'un ou de plusieurs nombres ou sont incluses dans un nombre inférieur ou égal au nombre de trajectoires d'injection de liquide isolant (142) formées sur la plaque de filière supérieure (110).
